# EUROPEAN PATENT APPLICATION

(11) **EP 1 857 841 A1**
(43) Date of publication of application: **21.11.2007**
(21) Application number: 07108240.8
(22) Date of filing: 15.05.2007
(51) Int. Cl.: G02B 1/11, G02B 7/02

(54) **Light absorbing antireflection structure, optical unit and lens barrel unit including the light absorbing antireflection structure, and optical device including the optical unit and the lens barrel unit**

(30) Priority: 15.05.2006 JP 2006134906
(71) Applicant: MATSUSHITA ELECTRIC INDUSTRIAL CO., LTD, Kadoma-shi, Osaka 571-8501 (JP)
(72) Inventor: Yoshikawa, Motonobu, Osaka 540-6319 (JP); Yamaguchi, Hiroshi, Osaka 540-6319 (JP); Yamada, Kazuhiro, Osaka 540-6319 (JP); Tamura, Takamasa, Osaka 540-6319 (JP); Isnimaru, Kazuhiko, Osaka 540-6319 (JP)
(74) Representative: Zimmer, Franz-Josef

(57) **Abstract**

An inner circumference surface of a lens barrel is formed so as to be a rough surface having a larger surface roughness than a wavelength of incident light and a plurality of fine concave/convex portions are regularly arranged within a cycle equal to or larger than the incident light.

## Description

### BACKGROUND OF THE INVENTION

### Field of the Invention

The present invention relates to a light absorbing antireflection structure, an optical unit and a lens barrel unit including the light absorbing antireflection structure and an optical device including the optical unit and the lens barrel unit.

### Description of Prior Art

For example, in Japanese Laid-Open Publication No. 2003-266580, a paint film is formed by applying a black material to a substrate surface and then the paint film is dried while a Benard cell is formed, thereby providing a light absorbing member having an increased light absorbing property.

In WO Publication No. WO2005/088355, the present inventors proposed a light absorbing member formed of a black material and having a curve surface including fine concave/convex portions formed thereon.

### SUMMARY OF THE INVENTION

However, known light absorbing members which have been disclosed in Japanese Laid-Open Publication No. 2003-266580 and WO Publication No. WO2005/088355 have the problem in which reflection of light can not be sufficiently suppressed. Specifically, with a light absorbing member disclosed in WO Publication No. WO2005/088355 exhibits a high antireflection effect except that regular reflection occurs. That is, the problem in which the occurrence of regular reflection can not be sufficiently suppressed is still left.

In view of the above-described points, the present invention has been devised and it is therefore an object of the present invention to provide a light absorbing antireflection structure in which reflection is sufficiently suppressed.

To achieve the above-described object, a light absorbing antireflection structure according to the present invention is directed to a light absorbing antireflection structure for suppressing reflection of light having a wavelength equal to or larger than a predetermined wavelength and absorbing the light of which reflection is suppressed and is characterized in that the light absorbing antireflection structure includes a rough surface having a larger surface roughness than the predetermined wavelength and a plurality of fine concave/convex portions are formed on the rough surface so as to be regularly arranged within a smaller cycle than the predetermined wavelength.

An optical unit according to the present invention is characterized in that the optical unit includes: an optical system; and a light absorbing antireflection structure for suppressing reflection of light from the optical system and absorbing the light from the optical system, which is placed so that the light from the optical system enters therein, the light absorbing antireflection structure includes a surface which the light from the optical system enters and is formed to be a rough surface having a larger surface roughness than a wavelength of the light from the optical system, and a plurality of fine concave/convex portions are formed on the surface so as to be regularly arranged within a cycle equal to or smaller than the wavelength of the light from the optical system.

A lens barrel unit according to the present invention is characterized in that the lens barrel unit includes: an optical system; and a lens barrel for storing the optical system therein, suppressing reflection of light from the optical system and absorbing light from the optical system, and the lens barrel is formed so as to include an inner circumference surface of a rough surface having a larger surface roughness than a wavelength of the light from the optical system and a plurality of fine concave/convex portions are formed on the inner circumference surface so as to be regularly arranged within a cycle equal to or smaller than a wavelength of the light from the optical system.

An optical device according to the present invention is characterized by including the optical unit or the lens barrel unit according to the present invention.

According to the present invention, a high antireflection effect can be achieved.

### BRIEF DESCRIPTION OF THE DRAWINGS

FIG. **1** is a schematic view illustrating a configuration of main part of an imaging device **1.**
FIG. **2** is a front view of a lens barrel **5.**
FIG. **3** is an enlarged cross-sectional view of part of the lens barrel **5**.
FIG. **4** is a further enlarged cross-sectional view of the part of the lens barrel **5**.
FIG. **5** is a graph showing the correlation between incident angle and reflection coefficient.
FIG. **6** is a graph showing intensity of reflected light of incident light at an incident angle of 45 degrees.
FIG. **7** is a graph showing the correlation between incident angle and reflection coefficient for a surface in which fine concave/convex portions **11.**
FIG. **8** is a graph showing the correlation between θ**ₐᵥₑ** and reflection coefficient.
FIG. **9** is a cross-sectional view illustrating a roughness shape of the part of inner circumference surface **10** shown in FIG. **4.**
FIG. **10** is a cross-sectional view for illustrating the case where θ is larger than 90%.
FIG. **11** is a spectrum obtained by Fourier-transforming a height of a shape of the inner circumference surface **10** in a normal direction of a reference plane.

### DESCRIPTION OF THE PREFERRED EMBODIMENTS

Hereafter, embodiments of the present invention will be described with reference to the accompanying drawings. Herein, an optical device implemented in accordance with the present invention will be described with reference to an imaging device as an example. However, the optical device according to the present invention is not limited to the imaging device but may be, for example, some other optical device such as an illumination device, a projector and the like.

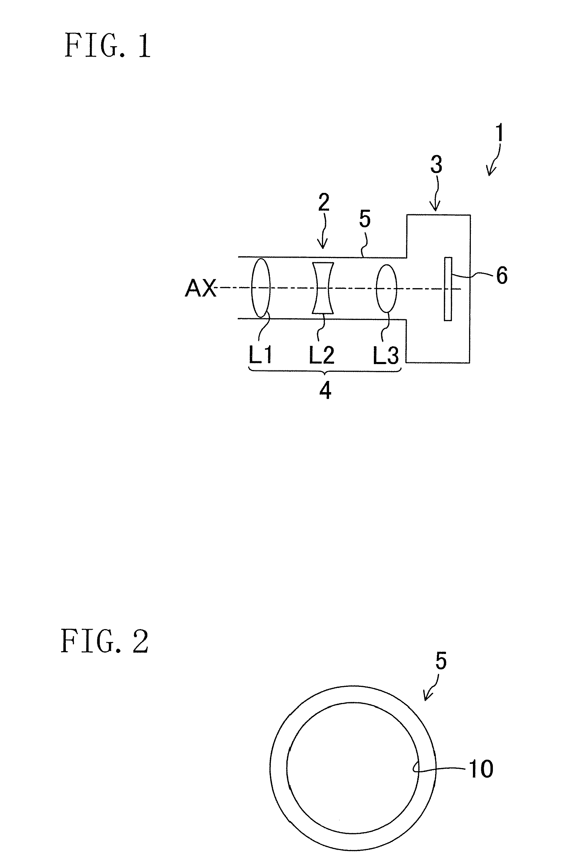

FIG. **1** is a schematic view illustrating a configuration of main part of an imaging device **1** according to this embodiment.

The imaging device **1** includes a device body **3** and a lens barrel unit **2** as an optical unit. In this case, an example in which the lens barrel unit **2** is mounted to the device body **3** will be described. However, for example, the lens barrel unit **2** may be constructed so as to be removable.

The lens barrel unit **2** includes a lens barrel **5** having a cylindrical shape (more specifically, a circular cylindrical shape) and an optical system **4** mounted in the lens barrel **5.** The device body **3** includes an imaging device **6** placed on an optical axis **AX** of the optical system **4.** The optical system **4** forms an optical image on an image area of the imaging device **6.** An optical image formed on an imaging area by the optical system **4** is converted into an electrical signal by the imaging device **6.** Then, for example, the electrical signal is stored in a memory provided in the device body **3** (or an external memory) and output to some other device via a cable connected to the device body **3.** The imaging device **6** can be formed of a CCD (charge coupled device), a CMOS (complementary metal-oxide semiconductor) or the like.

The optical system **4** is not particularly limited to a certain configuration as long as it can preferably form an optical image on an imaging area of the imaging device **6.** For example, as shown in FIG. **1,** the optical system **4** may include three lenses (or lens groups), i.e., a first lens (group) **L1,** a second lens (group) **L2** and a third lens (group) **L3.** Alternatively, the optical system **4** may have a configuration in which at least one of the three lenses (lens groups) **L1, L2** and **L3** is displaceable in the optical axis **AX** direction and focusing and/or scaling are allowed.

FIG. **2** is a front view of the lens barrel **5.**

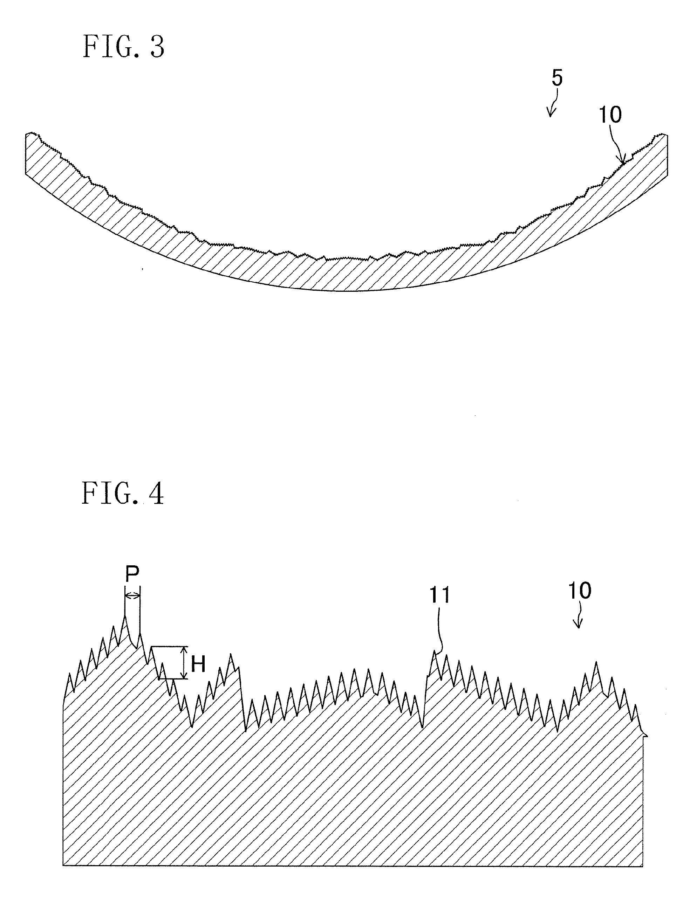

FIG. **3** is an enlarged cross-sectional view of part of the lens barrel **5.**

FIG. **4** is a further enlarged cross-sectional view of the part of the lens barrel **5.**

The lens barrel **5** is configured so as to absorb incident light (generally, visible light) into the optical system **4** from an image side. Thus, a ray bundle which enters from the image side into the lens barrel unit **2** at an angle equal to or larger than an overall angle of view of the optical system **4** and stray light caused by reflection at a surface of a lens or the like constituting the optical system **4** are absorbed by the lens barrel **5.** Accordingly, the generation of a ghost image, a flare or the like is suppressed and thus the imaging device **1** of this embodiment has a high optical performance.

Specifically, a light absorbing material (for example, a dye and a pigment) may be dispersedly mixed in the lens barrel **5.** As another option, substantially, the lens barrel **5** may be formed of a light absorbing material. As a light absorbing material for absorbing visible light, a black dye (for example, Plast Black 9850 and 8970 available from Arimoto Chemical Co., Ltd.) obtained by mixing a plurality of coloring agents such as cyan, magenta and yellow, a carbon black or the like can be used. A main body into which such a dye or a pigment is dispersedly mixed may be, for example, glass, resin such as acryl resin and poly carbonate resin (preferably, resin of which glass transition temperature is 90 °C or more and 170 °C or less) or glass fiber containing resin. Furthermore, in view of suppressing adhesion of dirt and dust to the lens barrel **5**, the lens barrel **5** preferably contains an antistatic material. Moreover, the lens barrel **5** preferably has an excellent light fastness (specifically, for ultraviolet light).

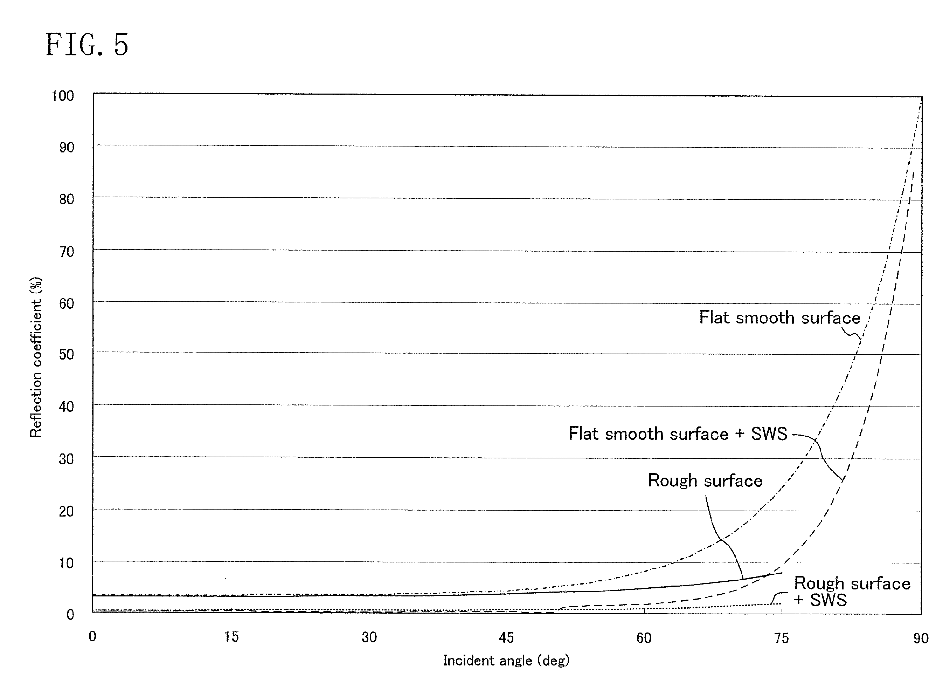

In the imaging device **1,** a plurality of fine concave/convex portions **11** for suppressing reflection of light are formed in an inner circumference surface **10** of the lens barrel **5.** More specifically, the plurality of fine concave/convex portions **11** are formed so as to be regularly arranged within a smaller cycle than a predetermined wavelength (in this case, a smaller cycle than a wavelength of incident light from the optical system **4,** i.e., a wavelength of visible light and, more preferably, a smallest wavelength of incident light from the optical system **4)** throughout the inner circumference surface **10** of the lens barrel **5.** Herein, a "predetermined wavelength" means to be a wavelength of light of which reflection is desired to be suppressed, or a wavelength of light of which reflection should be suppressed. Hereafter, a configuration in which the fine concave/convex portions **11** are regularly arranged will be occasionally referred to as "SWS". With this configuration, abrupt change in refractive index between the lens barrel **5** and an air layer can be suppressed, so that a refraction index is gradually changed in a surface layer portion of the inner circumference surface **10** including the fine concave/convex portions **11.** Thus, as shown in FIG. **5,** with the fine concave/convex portions **11** (SWS) formed in the inner circumference surface **10,** surface reflection at the inner circumference surface **10** of the lens barrel **5** can be more effectively suppressed.

As long as the fine concave/convex portions **11** have the function of moderating change in refractive index at an interface between the inner circumference surface **10** of the lens barrel **5** and an air layer, a shape of each of the fine concave/convex portions **11** is not particularly limited. For example, each of the fine concave/convex portions **11** may be an approximately conical concave or convex (of which a top portion may be chamfered or R-chamfered), a prismoid concave or convex or a filiform concave or a filiform convex of which a cross-sectional shape is triangular, trapezoidal, rectangular or the like (of which edge portions may be R-chamfered).

In view of realizing high antireflection effect, a cycle (i.e., a distance between top points of adjacent ones of the fine concave/convex portions **11** when viewed from the top in the normal direction of a reference plane of the inner circumference surface **10** formed to be a rough surface) of the fine concave/convex portions **11** is preferably equal to or smaller than a wavelength of incident light into the lens barrel unit **2** from an image side. Herein, a "reference plane" means to be a plane obtained by cutting off the fine concave/convex portions **11** and a roughness shape as high-frequency components. Herein, a "roughness shape" means to be a shape obtained by cutting off the fine concave/convex portions **11** as high-frequency components from a shape of the inner circumference surface **10** including the fine concave/convex portions **11** (hereafter, the shape of the inner circumference surface **10** including the fine concave/convex portions **11** will be referred to as merely a "shape of the inner circumference surface **10").** A height (strictly speaking, defined to be a distance from the reference plane of the inner circumference surface **10,** which is formed to be a rough surface, in the normal direction of the reference plane) of each of the fine concave/convex portions **11** is preferably equal to or larger than 0.4 times as large as a wavelength of incident light into the lens barrel unit **2** from an image side, more preferably equal to or larger than the wavelength, and even more preferably equal to or larger than three times as large as the wavelength. Strictly speaking, as in this embodiment, assume that incident light has a wavelength width. The cycle of the fine concave/convex portions **11** is preferably equal to or smaller than a smallest wavelength of incident light and the height of each of the fine concave/convex portions **11** is preferably equal to or larger than 0.4 times as large as the largest wavelength of incident light (more preferably the same as the smallest wavelength and even more preferably equal to or larger than three times as large as the largest wavelength).

Considering a design of the imaging device **1,** the fine concave/convex portions **11** do not have to exhibit antireflection effect for all incident light. For example, when a wavelength of incident light is in a wide wavelength range including ultraviolet light, near-ultraviolet light, visible light, near-infrared light and infrared light but the imaging device **6** is capable of detecting only light in the range from 400 nm to 1000 nm, it is not always required to suppress reflection of light having a smaller wavelength than 400 nm and light having a larger wavelength than 1000 nm. In such case, the cycle of the fine concave/convex portions **11** is preferably equal to or smaller than 400 nm. The height of each of the fine concave/convex portions **11** is preferably equal to or larger than 0.4 times as large as 1000 nm, i.e., 400 nm or more.

The fine concave/convex portions **11** may be formed so that the height of the fine concave/convex portions **11** differs between different parts (for example, each having a size of 1 mm squares) of the inner circumference surface **10.** However, in view of simplification of formation, the fine concave/convex portions **11** are preferably formed so that respective heights of the fine concave/convex portions **11** in the different parts are approximately the same. When the fine concave/convex portions **11** include conical/pyramidal concaves and conical/pyramid convexes, the fine concave/convex portions **11** are preferably formed so that a central axis of each of cones or pyramids, connecting a center point of a base and a top point of each of the cones or the pyramids, is approximately in parallel to central axises of other cones or pyramids. In this case, fabrication of the lens barrel **5** by injection molding is simple. For the same reason, when the fine concave/convex portions **11** include filiform concaves and filiform convexes each having a triangular cross section, the plurality of fine concave/convex portions **11** are preferably formed so that a center axis of each of filiform portions, connecting respective center points of a top and a base of each of the filiform portions, is approximately in parallel to center axises of other filiform portions in each part (for example, having a size of 1 mm squares) of the inner circumference surface **10.**

As has been described, in this embodiment, the lens barrel **5** absorbs incident light (strictly speaking, light having a wavelength of which reflection should be suppressed) into the lens barrel unit **2** from an image side and the plurality of fine concave/convex portions **11** for suppressing reflection of such light are formed in the inner circumference surface **10,** so that reflection of light at the inner circumference surface **10** of the lens barrel **5** is largely reduced. However, for example, when the inner circumference surface **10** is a smooth surface, regular reflection at the inner circumference surface **10** can not be sufficiently suppressed.

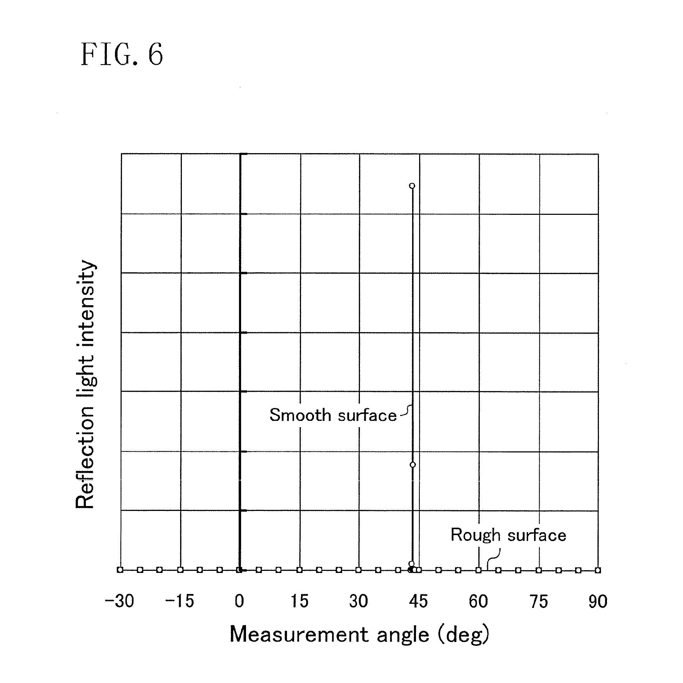

FIG. **6** is a graph showing intensity of reflected light of incident light at an incident angle of 45 degrees.

As shown in FIG. **6,** when the fine concave/convex portions **11** are formed on a smooth surface, reflection light at an output angle of about 45 degrees, i.e., regular reflection is observed. In this manner, when the inner circumference surface **10** in which the fine concave/convex portions **11** are formed is a smooth surface, regular reflection of incident light into the lens barrel unit **2** from an image side can not be sufficiently suppressed. In contrast, as shown in FIG. **6,** when the SWS is formed on a rough surface having a larger surface roughness than a wavelength of incident light, regular reflection is substantially not observed. In this embodiment, as shown in FIG. **3** and FIG. **4,** the inner circumference surface **10** of the lens barrel **5** is formed so as to be a rough surface having a larger surface roughness than a wavelength of incident light. More specifically, the inner circumference surface **10** is formed so that a surface roughness in terms of maximum height roughness **Rz** defined in ISO4287:1997 (JIS B0601: 2001) is larger than a wavelength of incident light. Thus, in the lens barrel **5** of this embodiment, regular reflection at the inner circumference surface **10** can be sufficiently suppressed. Therefore, the imaging device **1** in which the generation of a ghost image, a flare and the like is sufficiently suppressed can be achieved. Note that the effect of suppressing the generation of regular reflection tends to be reduced when the surface roughness of the inner circumference surface **10** is too large. A preferable range of the surface roughness **Rz** of the inner circumference surface **10** is 100 µm or less. The surface roughness **Rz** is more preferably 50 µm and even more preferably 30 µm.

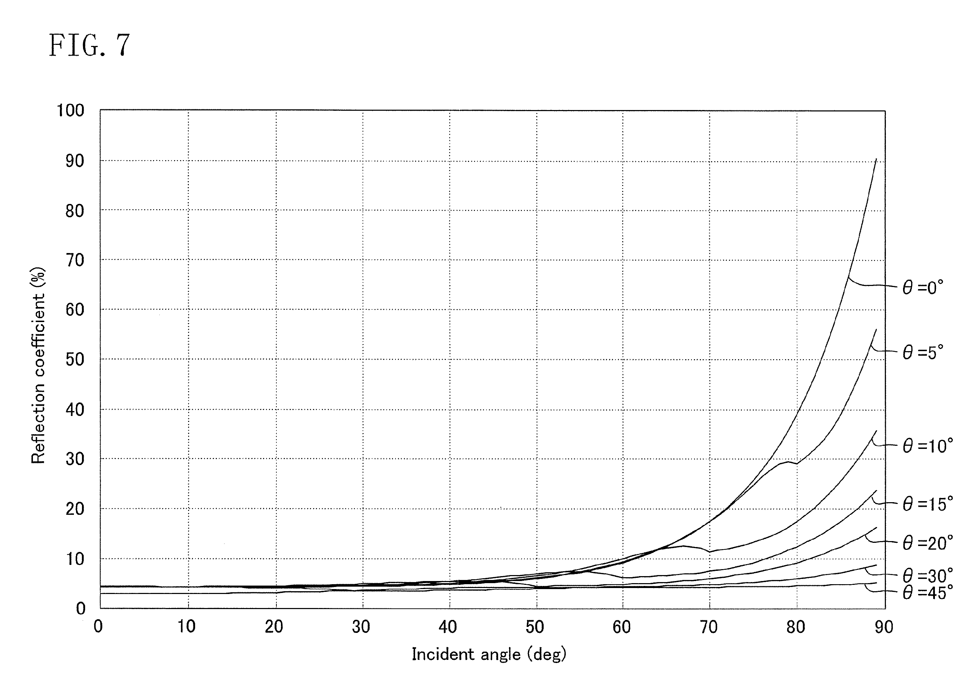

Furthermore, the inner circumference surface **10** in which the fine concave/convex portions **11** are formed is formed so as to be a rough surface having a larger surface roughness than a wavelength of incident light, so that a reflection coefficient of incident light at a relatively large incident angle can be reduced. Hereafter, this effect will be described in detail with reference to FIG. **5** and FIG. **7**.

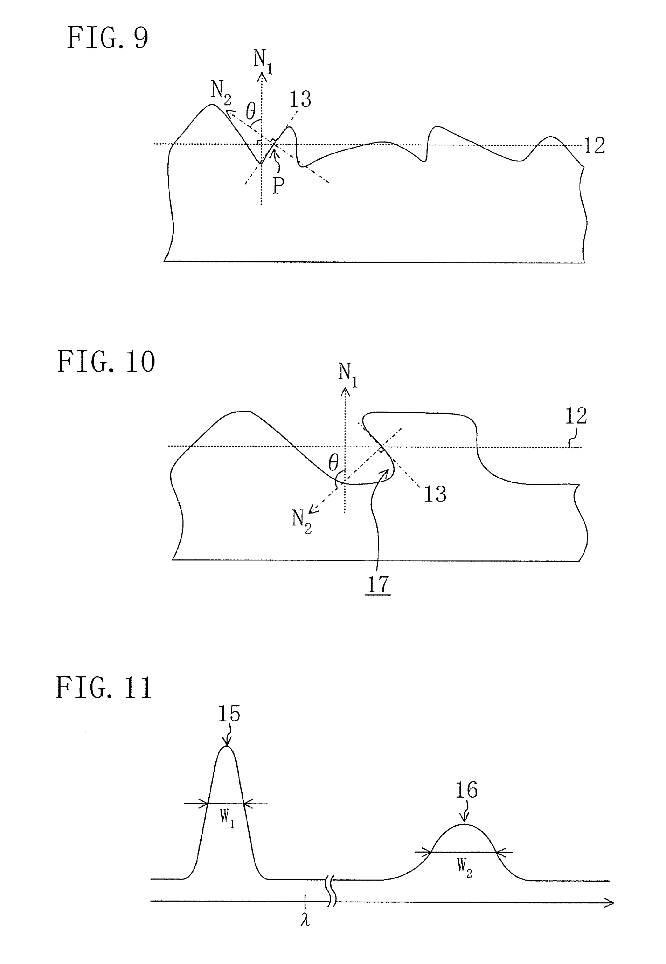

FIG. **7** is a graph showing the correlation between incident angle and reflection coefficient in surfaces in which the fine concave/convex portions **11** are formed. Note that θ in FIG. **7** denotes an angle between a normal vector **N₂** of a tangent plane **13** of a roughness shape of the inner circumference surface **10** and a normal vector **N₁** of a reference plane **12** of the inner circumference surface **10** (see FIG. 9).

As shown in FIG. **7**, assume that θ is 0 degrees (in other words, the inner circumference surface **10** is a smooth surface). For example, when incident light has a large angle, i.e., a larger angle than 50 degrees or an even larger angle, i.e., a larger angle than 70 degrees, even with the fine concave/convex portions **11** formed on the smooth surface, a reflection coefficient tends to be increased as an incident angle increases.

Normally, in the case of an optical device such as a lens which transmits light, there is only a small need to give consideration to reflection of light at such a large incident angle. However, as in this embodiment, in the case of a light absorbing antireflection structure (so-called "black body"), incident light is not always light at a relatively small incident angle, e.g., an angle of 45 degrees or less. Therefore, it is preferable that the light absorbing antireflection structure has a configuration which suppresses reflection of incident light at a relatively large incident angle. The problem of suppressing reflection of light at a relatively large incident angle is unique to the light absorbing antireflection structure.

In this embodiment, the inner circumference surface **10** is a rough surface and therefore an incident angle is substantially small in average, compared to the case where the inner circumference surface **10** is a smooth surface. Accordingly, as shown in FIG. **5,** in this embodiment, reflection of incident light at a relatively large incident angle can be effectively suppressed. Also, as shown in FIG. **5,** when the SWS is formed on a smooth surface, a relatively high antireflection effect for incident light at a relatively small incident angle can be achieved. However, a sufficient antireflection effect for incident light at a relatively large incident angle can not be achieved. That is, when the SWS is formed on a smooth surface, it is difficult to sufficiently suppress the dependency of reflection coefficient to angle.

In view of more effectively suppressing incident light at a relatively large incident angle, as shown in FIG. **9,** now consider about part in which an angle (θ) between a normal vector N₂ of a tangent plane **13** of a roughness shape of the inner circumference surface **10** (more specifically, a tangent plane of a shape, i.e., a roughness shape obtained by cutting off the fine concave/convex portions **11** as high-frequency components from a shape of the inner circumference surface **10** including the fine concave/convex portions **11)** and a normal vector **N₁** of the reference plane **12** of the inner circumference surface **10** is 5 degrees or less. The percentage of an area of part in which θ is 5 degrees or less per unit area (for example, per 1 mm squares) is preferably less than 80%. In other words, the percentage of an area per unit area of part in which θ is preferably 5 degrees or more is 20% or more. Moreover, the percentage of an area per unit area of part in which θ is 10 degrees or less is preferably less than 90%. In other words, the percentage of an area per unit area of part in which θ is 10 degrees or more is 10% or more. In such case, compared to the case where the fine concave/convex portions **11** are formed on a smooth surface, a reflection coefficient of light at an incident angle of 89 degrees can be reduced by about 30% or more.

More preferably, the percentage of the area per unit area of the part in which θ is 5 degrees or less is preferably less than 50%. In other words, the percentage of the area per unit area of the part in which θ is 5 degrees or more is preferably 50% or more. Moreover, the percentage of the area per unit area of the part in which θ is 10 degrees or less is preferably less than 80%. In other words, the percentage of the area per unit area of the part in which θ is 10 degrees or more is preferably 20% or more. In such case, compared to the case where the fine concave/convex portions **11** are formed on a smooth surface, the reflection coefficient of light at an incident angle of 89 degrees can be reduced by about 50% or more.

More preferably, the percentage of the area per unit area of the part in which θ is 5 degrees or less is preferably less than 30%. In other words, the percentage of the area per unit area of the part in which θ is 5 degrees or more is preferably 70% or more. Moreover, the percentage of the area per unit area of the part in which θ is preferably 10 degrees or less is preferably less than 50%. In other words, the percentage of the area per unit area of the part in which θ is 10 degrees or more is preferably 50% or more. In such case, compared to the case where the fine concave/convex portions **11** are formed on a smooth surface, the reflection coefficient of light at an incident angle of 89 degrees can be reduced by about 70% or more.

Next, a preferable range of an average value **(θₐᵥₑ)** of θ will be described.

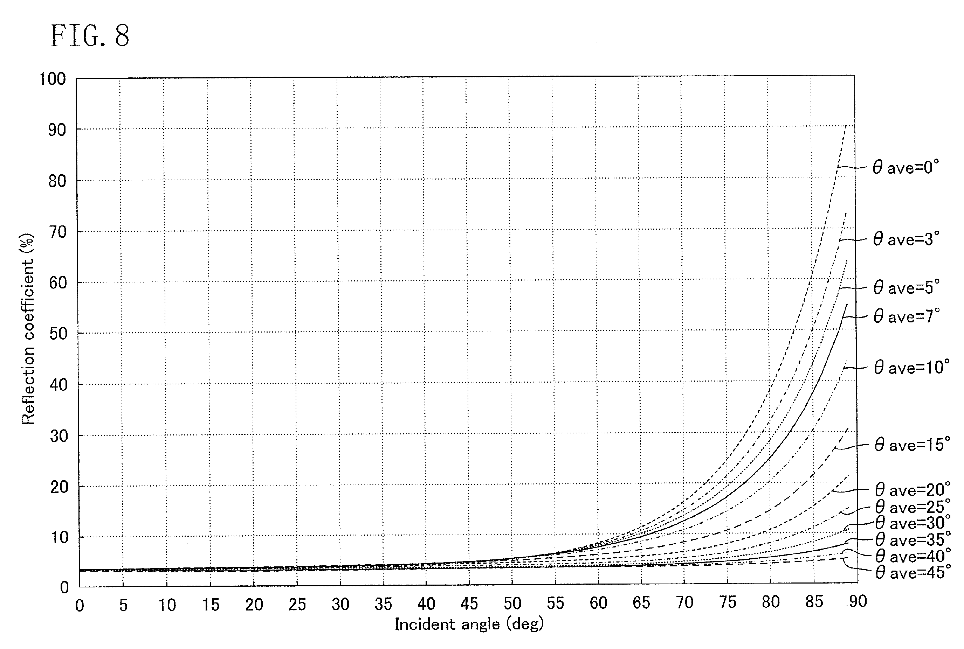

FIG. **8** is a graph showing the correlation between **θₐᵥₑ** and reflection coefficient.

As shown in FIG. **8,** as **θₐᵥₑ** increases, the dependency on incident angle is reduced, so that a high antireflection effect for light at a relatively large incident angle can be achieved. Specifically, θ**ₐᵥₑ** is preferably 5 degrees or more. In such case, compared to the case where the fine concave/convex portions **11** are formed on a smooth surface, the reflection coefficient of light at an incident angle of 89 degrees can be reduced by about 30% or more. More preferably, θ**ₐᵥₑ** is 10 degrees or more. In such case, compared to the case where the fine concave/convex portions **11** are formed on a smooth surface, the reflection coefficient of light at an incident angle of 89 degrees can be reduced by about 50% or more. It is even more preferable that θ**ₐᵥₑ** is 15 degrees or more. In such case, compared to the case where the fine concave/convex portions **11** are formed on a smooth surface, the reflection coefficient of light at an incident angle of 89 degrees can be reduced by about 30% or more.

Moreover, a peak (i.e., a value of θ which is most frequently included) of a θ distribution is preferably larger than 0 degrees. The peak is more preferably 2 degrees or more, or even more preferably 5 degrees or more.

In views of fabrication, as shown in FIG. **10,** it is preferable that part in which θ is larger than 90 degrees does not exist. In other words, it is preferable that the inner circumference surface **10** is substantially formed of a plane having a roughness shape of θ ≤ 90 degrees. As shown in FIG. **10,** when the part in which θ is larger than 90 degrees exists, it is difficult to form the fine concave/convex portions **11** on a surface facing to a depression portion **17.**

Furthermore, the inner circumference surface **10** is preferably formed so that diffracted light is not generated from incident light. Specifically, the roughness shape of the inner circumference surface **10** is preferably formed so as to be aperiodic. In other words, as shown in FIG. **11,** in a spectrum obtained by Fourier-transforming a height distribution in the normal direction of the reference plane of the inner circumference surface **10** (including the fine concave/convex portions **11** formed on the inner circumference surface **10),** a peak width (for example, a width of a peak at a half of a height of the peak) **W₂** of a peak **16** for the roughness shape of the inner circumference surface **10** is preferably larger than a peak width **W₁** of a peak **15** for the fine concave/convex portions **11.** For example, if the roughness shape of the inner circumference surface **10** is formed within a cycle, there might be cases where diffracted light is generated from incident light into the inner circumference surface **10** and a ghost image, a flare and the like are generated due to the diffracted light. However, with the above-described configuration, the generation of diffracted light and also the generation of a ghost image, a flare and the like can be effectively suppressed.

In view of effectively reducing influences on an optical image of diffracted light formed on an image area of the imaging device **6,** the inner circumference surface **10** is preferably formed so that a distribution width of cycles standardized with a center cycle (which is most frequently included in the inner circumference surface **10)** of the roughness shape is equal to or larger than 0.4 times as large as the center cycle. If the distribution width of the cycles standardized with the center cycle is smaller than 0.4 times as large as the center cycle, in the inner circumference surface **10,** part of a diffraction angle in which a second-order diffracted light exists and another part of a diffraction angle in which a third-order diffracted light exists are isolated from each other, so that unevenness in the generated diffracted light might be generated. On the other hand, if the distribution width of the cycles standardized with the center cycle is equal to or larger than 0.4 times as large as the center cycle, in the inner circumference surface **10,** part of a diffraction angle in which the second-order diffracted light is generated and another part of a diffraction angle in which the third-order diffracted light is generated are partially superimposed with each other, so that unevenness in diffracted light can be reduced.

In view of further reducing unevenness in diffracted light, the distribution width of the cycles standardized with the center cycle is preferably equal to or larger than 2/3 times as large as the center cycle. With this configuration, not only part of a diffraction angle in which the second-order diffracted light is generated and another part of a diffraction angle in which the third-order diffracted light is generated are partially superimposed with each other but also part of a diffraction angle in which a first-order diffracted light is generated and another part of a diffraction angle in which the second-order diffracted light is generated are partially superimposed with each other, so that unevenness in diffracted light due to the absence of part of a diffraction angle in which neither the first-order diffracted light nor the second-order diffracted light exist can be reduced.

In this embodiment, an example where the SWS is formed directly in the inner circumference surface of the lens barrel **5** has been described. However, a seal in which the SWS is formed may be adhered or cohered onto an inner circumference surface of a lens barrel to form the lens barrel **5**. In other words, the lens barrel **5** does not have to be a single unit body, but may be formed of a plurality of components.

In this embodiment, an example where the SWS is formed throughout the inner circumference surface **10** of the lens barrel **5** has been described. However, depending on other conditions such as the configuration of the optical system **4** and the like, the SWS does not have to be provided throughout the inner circumference surface **10** of the lens barrel **5**, but may be formed only in necessary part. In such case, as well as the part in which the SWS is provided, other part of the inner circumference surface **10** may be a rough surface having the same surface roughness as the surface roughness of the part in which the SWS is provided or may be a smooth surface having a smaller surface roughness than the surface roughness of the part in which the SWS is provided. Furthermore, some other antireflection structure including a multilayer film of a film having a relatively low reflection coefficient and a film having a relatively large reflection coefficient may be formed in part in which the SWS is not formed. That is, as long as at least part of a surface of a light absorbing member which light enters is formed to be a rough surface and the SWS is formed on the rough surface, a light absorbing antireflection structure according to the present invention is not limited at all. Moreover, even in the part in which the SWS is formed, a height and a cycle (pitch) of the SWS may be adjusted as necessary.

Moreover, the SWS structure may be formed on surfaces of other members such as the lenses (lens groups) **L1, L2** and **L3** constituting the optical system **4** as well as on the inner circumference surface **10** of the lens barrel **5.**

Moreover, as in this embodiment, when the lens barrel **5** has a light absorbing property, there might be cases where, after using the imaging device **1** for a long time, the lens barrel **5** generates heat. Furthermore, when heat generation becomes stronger or a high temperature state continues for a long time, there might be cases where the lens barrel **5** is deteriorated by heat. To suppress the deterioration by heat, a space may be formed in the lens barrel **5** and a refrigerant may be enclosed therein. Alternatively, the internal space in the lens barrel **5** may be connected to a radiator and the like so that the refrigerant therein is circulated to sequentially cool down the lens barrel **5**. Note that the refrigerant, an antifreeze liquid containing polyethylene glycol and water, air, a compound liquid containing alcohol and water, or the like can be used.

As has been described, in this embodiment, using an imaging device as an example of the optical device according to the present invention, the light absorbing antireflection structure (lens barrel **5**) formed so as to have a cylindrical shape has been described particularly in details. However, according to the present invention, for the light absorbing antireflection structure, a shape of the above-described lens barrel **5** is not limited to the above-described shape but may be formed into various different shapes such as a flat plane shape, a sheet shape, a truncated cone or a prismoid shape in which a through hole passing through in the height direction is formed, and the like. Furthermore, a surface of the light absorbing antireflection structure in which the SWS is not formed may be formed on an adhesion surface or a cohesion surface. Specifically, the light absorbing antireflection structure may be used for an image sensor such as a charge-coupled device (CCD) and the like, an optical measuring device such as a power meter, an energy meter, a reflection coefficient measuring device and the like , a microlens array, a photo disc and the like.

The present invention is not limited to the above-described embodiment and various modifications are possible without departing from the spirit and material features of the present invention. The above-described embodiment is merely an example in all aspects and its interpretation is not to be limited. The scope of the present invention is indicated by the scope of claims and not limited by the specification. Furthermore, all changes and modifications belonging to the scope of equivalents of the claims fall within the scope of the present invention.

## Claims

1. A light absorbing antireflection structure for suppressing reflection of light having a wavelength equal to or larger than a predetermined wavelength and absorbing the light of which reflection is suppressed, the light absorbing antireflection structure comprising a rough surface having a larger surface roughness than the predetermined wavelength,
wherein a plurality of fine concave/convex portions are formed on the rough surface so as to be regularly arranged within a smaller cycle than the predetermined wavelength.

2. The light absorbing antireflection structure of claim 1, wherein the fine concave/convex portions are approximately conical/pyramidal concaves and convexes, or filiform concaves and filiform convexes.

3. The light absorbing antireflection structure of claim 1, wherein a surface roughness of the rough surface in terms of a maximum height roughness **Rz** defined by ISO4287:1997 is larger than the predetermined wavelength.

4. The light absorbing antireflection structure of claim 1, wherein a surface roughness of the rough surface in terms of a maximum height roughness **Rz** defined by ISO4287:1997 is smaller than 100 µm.

5. The light absorbing antireflection structure of claim 1, wherein a surface roughness of the rough surface in terms of a maximum height roughness **Rz** defined by ISO4287:1 is smaller than 50 µm.

6. The light absorbing antireflection structure of claim 1, wherein a surface roughness of the rough surface in terms of a maximum height roughness **Rz** defined by ISO4287:1997 is smaller than 30 µm.

7. The light absorbing antireflection structure of claim 1, wherein respective heights of the plurality of fine concave/convex portions from the rough surface in a normal direction of a reference plane are approximately the same.

8. The light absorbing antireflection structure of claim 1, wherein the rough surface has an aperiodic roughness shape.

9. The light absorbing antireflection structure of claim 8, wherein the rough surface is formed so that a distribution width of cycles standardized with a center cycle of the roughness shape is equal to or larger than 0.4 times as large as the center cycle.

10. The light absorbing antireflection structure of claim 8, wherein the rough surface is formed so that a distribution width of cycles standardized with a center cycle of the roughness shape is equal to or larger than 2/3 times as large as the center cycle.

11. The light absorbing antireflection structure of claim 1, wherein in a spectrum obtained by Fourier-transforming a height distribution in a normal direction of a reference plane of the rough surface, a peak for a roughness shape of the rough surface has a larger width than a width of a peak for the fine concave/convex portions in the spectrum.

12. The light absorbing antireflection structure of claim 1, wherein the rough surface is configured so that an average value for an angle between a normal vector of a tangent plane of a roughness shape and a normal vector of a reference plane of the rough surface is 5 degrees or more.

13. The light absorbing antireflection structure of claim 1, wherein the rough surface is configured so that a peak of a distribution for an angle between a normal vector of a tangent plane of a roughness shape and a normal vector of a reference plane of the rough surface is larger than 0 degrees.

14. The light absorbing antireflection structure of claim 1, wherein the rough surface is configured so that a percentage of an area per unit area of part in which an angle between a normal vector of a tangent plane of a roughness shape and a normal vector of a reference plane of the rough surface is 5 degrees or less is less than 80%.

15. The light absorbing antireflection structure of claim 1, wherein the rough surface is configured so that a percentage of an area per unit area of part in which an angle between a normal vector of a tangent plane of a roughness shape and a normal vector of a reference plane of the rough surface is 10 degrees or less is less than 90%.

16. The light absorbing antireflection structure of claim 1, wherein the rough surface is substantially formed of a plane in which an angle between a normal vector of a tangent plane of a roughness shape and a normal vector of a reference plane of the rough surface is 90 degrees or less.

17. The light absorbing antireflection structure of claim 1, wherein each of the plurality of fine concave/convex portions is a conical/pyramidal concave or convex and respective center axises of the plurality of fine concave/convex portions are parallel to each other, each of the center axises connecting a center of a base and a top point of each of the concave/convex portions.

18. The light absorbing antireflection structure of claim 1, wherein each of the plurality of fine concave/convex portions has a height equal to or larger than 0.4 times as large as a wavelength of light of which reflection is suppressed.

19. The light absorbing antireflection structure of claim 1, wherein the light absorbing antireflection structure has a cylindrical shape and the fine concave/convex portions are formed on an inner circumference surface.

20. An optical unit comprising:
an optical system; and
a light absorbing antireflection structure for suppressing reflection of light from the optical system and absorbing the light from the optical system, the light absorbing antireflection structure being placed so that the light from the optical system enters therein,
wherein the light absorbing antireflection structure includes a surface which the light from the optical system enters and is formed to be a rough surface having a larger surface roughness than a wavelength of the light from the optical system, and
a plurality of fine concave/convex portions are formed on the surface so as to be regularly arranged within a cycle equal to or smaller than the wavelength of the light from the optical system.

21. A lens barrel unit comprising:
an optical system; and
a lens barrel for storing the optical system therein, suppressing reflection of light from the optical system and absorbing light from the optical system,
wherein the lens barrel is formed so as to include an inner circumference surface of a rough surface having a larger surface roughness than a wavelength of the light from the optical system and a plurality of fine concave/convex portions are formed on the inner circumference surface so as to be regularly arranged within a cycle equal to or smaller than a wavelength of the light from the optical system.

22. An optical device comprising the optical unit of claim 20.

23. An optical device comprising the lens barrel of claim 21.
